# EUROPEAN PATENT APPLICATION

(11) **EP 4 660 536 A1**
(43) Date of publication of application: **10.12.2025**
(21) Application number: 25181601.3
(22) Date of filing: 09.06.2025
(51) Int. Cl.: F23R 3/28, F23R 3/36

(54) **GASEOUS FUEL NOZZLE FOR TURBINE ENGINE POWERPLANT**

(30) Priority: 07.06.2024 US 202463657513 P
(71) Applicant: PRATT & WHITNEY CANADA CORP., Longueuil, Québec J4G 1A1 (CA)
(72) Inventor: KANNAN, Jayaprakash, (01BE5) Longueuil, J4G 1A1 (CA); WONG, Owen, (01BE5) Longueuil, J4G 1A1 (CA)
(74) Representative: Dehns

(57) **Abstract**

An apparatus is provided for a powerplant (20). This apparatus includes a fuel nozzle (84) extending longitudinally along a nozzle centerline (88) to a distal end (90). The fuel nozzle (84) includes a plurality of gaseous fuel passages (116) and a plurality of air passages (128). The gaseous fuel passages (116) are arranged circumferentially about the nozzle centerline (88). The gaseous fuel passages (116) respectively extend within the fuel nozzle (84) to a plurality of fuel passage outlets (110) disposed at the distal end (90) of the fuel nozzle (84). The air passages (128) are arranged circumferentially about the nozzle centerline (88). The air passages (128) respectively extend within the fuel nozzle (84) to a plurality of air passage outlets (112) disposed at the distal end (90) of the fuel nozzle (84). The fuel passage outlets (110) and the air passage outlets (112) are disposed in a common plane.

## Description

### TECHNICAL FIELD

This invention relates generally to a turbine engine and, more particularly, to a fuel nozzle for the turbine engine.

### BACKGROUND INFORMATION

A gas turbine engine includes one or more fuel nozzles for injecting fuel into a combustor for combustion. Various types of fuel nozzles are known in the art. While these known fuel nozzles have various benefits, there is still room in the art for improvement.

### SUMMARY

According to an aspect of the present invention, an apparatus is provided for a powerplant. This apparatus includes a fuel nozzle extending longitudinally along a nozzle centerline to a distal end. The fuel nozzle includes a plurality of gaseous fuel passages and a plurality of air passages. The gaseous fuel passages are arranged circumferentially about the nozzle centerline. The gaseous fuel passages respectively extend within the fuel nozzle to a plurality of fuel passage outlets disposed at the distal end of the fuel nozzle. The air passages are arranged circumferentially about the nozzle centerline. The air passages respectively extend within the fuel nozzle to a plurality of air passage outlets disposed at the distal end of the fuel nozzle. The fuel passage outlets and the air passage outlets are disposed in a common plane.

According to another aspect of the present invention, another apparatus is provided for a powerplant. This apparatus includes a fuel nozzle extending longitudinally along a nozzle centerline to a distal end. The fuel nozzle includes a plurality of fuel passages and a plurality of air passages. The fuel passages are arranged circumferentially about the nozzle centerline. The fuel passages respectively extend within the fuel nozzle to a plurality of fuel passage outlets disposed at the distal end of the fuel nozzle. The fuel nozzle is configured to direct fuel out of the fuel nozzle from each of the fuel passage outlets along a respective fuel flow trajectory projecting radially inwards towards the nozzle centerline away from the distal end of the fuel nozzle. The air passages are arranged circumferentially about the nozzle centerline. The air passages respectively extend within the fuel nozzle to a plurality of air passage outlets disposed at the distal end of the fuel nozzle. The fuel nozzle is configured to direct compressed air out of the fuel nozzle from each of the air passage outlets along a respective air flow trajectory projecting radially inwards towards the nozzle centerline away from the distal end of the fuel nozzle.

According to another aspect of the present invention, another apparatus is provided for a powerplant. This apparatus includes a fuel nozzle extending longitudinally along a nozzle centerline to a distal end. The fuel nozzle includes a plurality of fuel passages and a plurality of air passages. The fuel passages are arranged circumferentially about the nozzle in an annular array. The fuel passages respectively extend within the fuel nozzle to a plurality of fuel passage outlets disposed at the distal end of the fuel nozzle. The air passages are arranged circumferentially about the nozzle centerline in an annular array. The air passages respectively extend within the fuel nozzle to a plurality of air passage outlets disposed at the distal end of the fuel nozzle. The fuel passage outlets are arranged radially inboard of the air passage outlets.

The following optional features may be applied to any of the above aspects.

The fuel passage outlets and the air passage outlets may be disposed in a common plane perpendicular to the nozzle centerline.

The apparatus may also include a fuel delivery system comprising a gaseous fuel source. The fuel directed out of the fuel nozzle may be gaseous fuel which is received by the fuel nozzle from the gaseous fuel source.

The common plane may be perpendicular to the nozzle centerline.

The apparatus may further include a fuel delivery system comprising a gaseous fuel source. The fuel delivery system may be configured to deliver gaseous fuel to the fuel nozzle for directing through the gaseous fuel passages.

The gaseous fuel may be or otherwise include hydrogen gas.

The fuel passage outlets may be arranged circumferentially about the nozzle centerline in an annular fuel passage outlet array. The air passage outlets may be arranged circumferentially about the nozzle centerline in an annular air passage outlet array which is radially outboard of and circumscribes the annular fuel passage outlet array.

The gaseous fuel passages may include a first gaseous fuel passage. The fuel passage outlets may include a first fuel passage outlet. The first gaseous fuel passage may extend along a fuel passage centerline to the first fuel passage outlet. A trajectory of the fuel passage centerline at the first fuel passage outlet may project out from the distal end of the fuel nozzle in a radial outward direction away from the nozzle centerline.

The gaseous fuel passages may include a first gaseous fuel passage. The fuel passage outlets may include a first fuel passage outlet. The first gaseous fuel passage may extend along a fuel passage centerline to the first fuel passage outlet. A trajectory of the fuel passage centerline at the first fuel passage outlet may project out from the distal end of the fuel nozzle in a radial inward direction towards the nozzle centerline.

The trajectory of the fuel passage centerline at the first fuel passage outlet may be non-coincident with the nozzle centerline.

The trajectory of the fuel passage centerline at the first fuel passage outlet may also project out from the distal end of the fuel nozzle in a direction tangent to a reference circle coaxial with the nozzle centerline.

The air passages may include a first air passage. The air passage outlets may include a first air passage outlet. The first air passage may extend along an air passage centerline to the first air passage outlet. A trajectory of the air passage centerline at the first air passage outlet may project out from the distal end of the fuel nozzle in a radial inward direction towards the nozzle centerline.

The trajectory of the air passage centerline projecting out the first air passage outlet may be coincident with the trajectory of the fuel passage centerline projecting out from the first fuel passage outlet at a target location.

The target location may be spaced radially out from the nozzle centerline.

The air passages are first air passages. The fuel nozzle may also include a plurality of second air passages. The second air passages may be arranged circumferentially about the nozzle centerline. The second air passages may respectively extend within the fuel nozzle to a plurality of second air passage outlets. One of the second air passages may extend along a second air passage centerline to a respective one of the second air passage outlets. A trajectory of the second air passage centerline at the respective one of the second air passage outlets may project out from the fuel nozzle in a radial outward direction away from the nozzle centerline.

The air passages may include a first air passage. The air passage outlets may include a first air passage outlet. The first air passage may extend along an air passage centerline to the first air passage outlet. A trajectory of the air passage centerline at the first air passage outlet may project out from the distal end of the fuel nozzle in a radial inward direction towards the nozzle centerline.

The trajectory of the air passage centerline at the first air passage outlet may be non-coincident with the nozzle centerline.

The trajectory of the air passage centerline at the first air passage outlet may also project out from the distal end of the fuel nozzle in a direction tangent to a reference circle coaxial with the nozzle centerline.

The fuel nozzle may be configured to direct gaseous fuel out of the fuel passage outlets to swirl in a first direction about the nozzle centerline. The fuel nozzle may be configured to direct compressed air out of the air passage outlets to swirl in a second direction about the nozzle centerline opposite the first direction.

The fuel nozzle may be configured to direct gaseous fuel out of the fuel passage outlets to swirl in a first direction about the nozzle centerline. The fuel nozzle may be configured to direct compressed air out of the air passage outlets to swirl in the first direction about the nozzle centerline.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft powerplant.
FIG. 2 is a schematic illustration of a combustor with a fuel delivery system.
FIG. 3 is a sectional illustration of a portion of a combustor section with the fuel delivery system.
FIG. 4 is a partial sectional illustration of a fuel nozzle.
FIGS. 5A and 5B are illustrations of a face surface of the fuel nozzle with various outlet arrangements.
FIGS. 6A and 6B are illustrations of the face surface of the fuel nozzle with various other outlet arrangements.
FIG. 7 is a partial side illustration of the fuel nozzle of FIGS. 6A and 6B.
FIG. 8 is a partial sectional illustration of another fuel nozzle.
FIGS. 9A-C are schematic cross-sectional illustrations of various fuel passage geometries.

### DETAILED DESCRIPTION

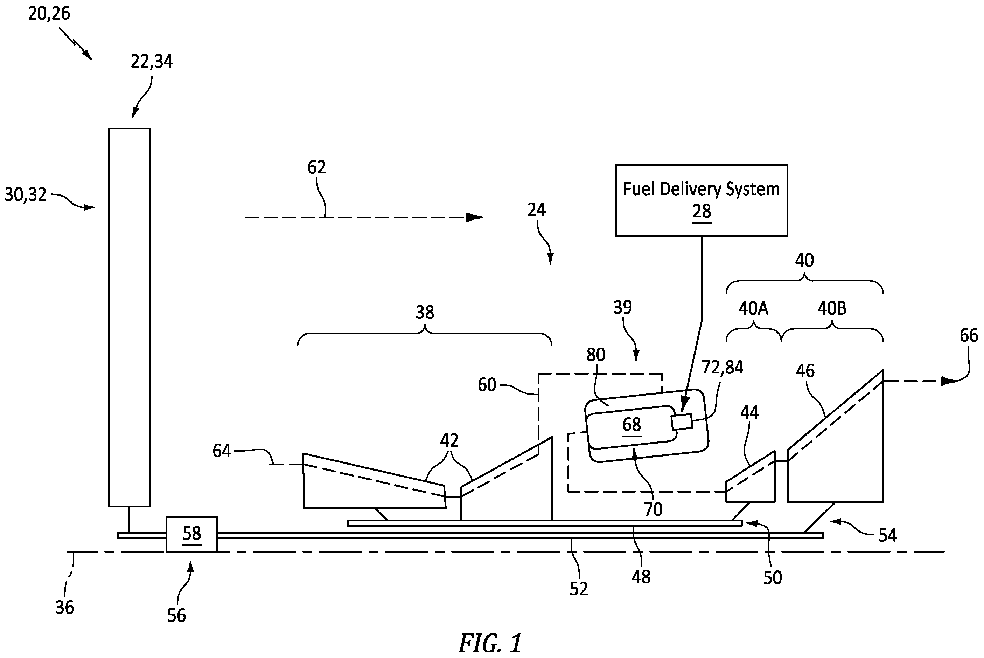

FIG. 1 illustrates a powerplant 20 for an aircraft. The aircraft may be an airplane, a helicopter, a drone (e.g., an unmanned aerial vehicle (UAV)) or any other manned or unmanned aerial vehicle or system. The powerplant 20 may be configured as, or otherwise included as part of, a propulsion system for the aircraft. The powerplant 20 may also or alternatively be configured as, or otherwise included as part of, an electrical power system for the aircraft. The present invention, however, is not limited to aircraft applications. The powerplant 20, for example, may alternatively be configured as, or otherwise included as part of, an electrical power system for ground-based operation (e.g., an industrial powerplant), for aquatic operation, or otherwise. However, for ease of description, the powerplant 20 is described below as an aircraft powerplant.

The aircraft powerplant 20 of FIG. 1 includes a mechanical load 22 and a core 24 of a gas turbine engine 26, where the engine core 24 is configured to power operation of the mechanical load 22. The aircraft powerplant 20 also includes a fuel delivery system 28 for the turbine engine 26 and its engine core 24.

The mechanical load 22 may be configured as or otherwise include a rotor 30 mechanically driven by the engine core 24. This driven rotor 30 may be a bladed propulsor rotor for the aircraft propulsion system. The propulsor rotor may be a ducted propulsor rotor or an open propulsor rotor; e.g., an un-ducted propulsor rotor. For example, where the turbine engine 26 is a turbofan engine, the ducted propulsor rotor may be a fan rotor 32. Where the turbine engine 26 is a turboprop engine, the open propulsor rotor may be a propeller rotor. Where the turbine engine 26 is a turboshaft engine, the open propulsor rotor may be a rotorcraft rotor such as a helicopter main rotor or a helicopter tail rotor. Alternatively, the driven rotor 30 may be configured as a generator rotor of an electric power generator for the aircraft electrical power system; e.g., an auxiliary power unit (APU) system. The present invention, however, is not limited to the foregoing exemplary mechanical loads nor to the foregoing exemplary turbine engines. The turbine engine 26, for example, may alternatively be configured as a turbojet engine, a propfan engine, a pusher fan engine or any other type of turbine engine operable to power the operation of the mechanical load 22. However, for ease of description, the mechanical load 22 is described below as a fan section 34 of the turbine engine 26, and the driven rotor 30 is described below as the fan rotor 32 within the fan section 34.

The turbine engine 26 extends axially along an axis 36 from a forward, upstream end of the turbine engine 26 to an aft, downstream end of the turbine engine 26. Briefly, this axis 36 may be a centerline axis of the turbine engine 26 and its members 24 and 32. The axis 36 may also be a rotational axis of one or more members of the turbine engine 26 and its engine core 24 including the fan rotor 32 - the driven rotor 30. The turbine engine 26 of FIG. 1 includes the fan section 34, a compressor section 38, a combustor section 39 and a turbine section 40. The turbine section 40 of FIG. 1 includes a high pressure turbine (HPT) section 40A and a low pressure turbine (LPT) section 40B, which LPT section 40B of FIG. 1 is a power turbine (PT) section for driving rotation of the fan rotor 32.

The compressor section 38 includes a compressor rotor 42. The HPT section 40A includes a high pressure turbine (HPT) rotor 44. The LPT section 40B includes a low pressure turbine (LPT) rotor 46. The fan rotor 32, the compressor rotor 42, the HPT rotor 44 and the LPT rotor 46 each respectively include one or more arrays (e.g., stages) of rotor blades, where the rotor blades in each array are arranged circumferentially around and are connected to a respective rotor disk or hub. The rotor blades in each array, for example, may be formed integral with or mechanically fastened, welded, brazed and/or otherwise attached to the respective rotor disk and/or hub.

The compressor rotor 42 is coupled to and rotatable with the HPT rotor 44. The compressor rotor 42 of FIG. 1, for example, is connected to the HPT rotor 44 by a high speed shaft 48. At least (or only) the compressor rotor 42, the HPT rotor 44 and the high speed shaft 48 collectively form a high speed rotating assembly 50; e.g., a high speed spool of the engine core 24. The LPT rotor 46 of FIG. 1 is connected to a low speed shaft 52. At least (or only) the LPT rotor 46 and the low speed shaft 52 collectively form a low speed rotating assembly 54; e.g., a low speed spool / a power turbine spool of the engine core 24. This low speed rotating assembly 54 is further coupled to the fan rotor 32 - the driven rotor 30 - through a drivetrain 56. This drivetrain 56 may be configured as a geared drivetrain, where a geartrain 58 (e.g., a transmission, a speed change device, an epicyclic geartrain, etc.) is disposed between and operatively couples the fan rotor 32 to the low speed rotating assembly 54 and its LPT rotor 46. With this arrangement, the fan rotor 32 may rotate at a different (e.g., slower) rotational velocity than the low speed rotating assembly 54 and its LPT rotor 46. However, the drivetrain 56 may alternatively be configured as a direct drive drivetrain, where the geartrain 58 is omitted. With such an arrangement, the fan rotor 32 rotates at a common (the same) rotational velocity as the low speed rotating assembly 54 and its LPT rotor 46. Referring again to FIG. 1, each of the rotating assemblies 50, 54 and its members as well as the fan rotor 32 may be rotatable about the axis 36.

The turbine engine 26 of FIG. 1 includes a (e.g., annular) core flowpath 60 and a (e.g., annular) bypass flowpath 62. Here, the bypass flowpath 62 is a ducted flowpath within the aircraft powerplant 20 and its turbine engine 26. The bypass flowpath 62, however, may alternatively be an open flowpath where the driven rotor 30 is alternatively configured as the open propulsor rotor, or the bypass flowpath 62 may be omitted where the driven rotor 30 is alternatively configured as the generator rotor. Referring again to FIG. 1, the core flowpath 60 extends within the turbine engine 26 and its engine core 24 from an airflow inlet 64 into the core flowpath 60 to a combustion products exhaust 66 from the core flowpath 60. More particularly, the core flowpath 60 extends from the core inlet 64, sequentially through the compressor section 38, the combustor section 39, the HPT section 40A and the LPT section 40B, to the core exhaust 66. The bypass flowpath 62 of FIG. 1 extends outside of the engine core 24 thereby bypassing the engine core 24 and its engine sections 38-40B.

During operation of the turbine engine 26, air is directed across the fan rotor 32 (e.g., the propulsor rotor) and into the engine core 24 through the core inlet 64. This air entering the core flowpath 60 may be referred to as core air. The core air is compressed by the compressor rotor 42 and directed into a combustion chamber 68 (e.g., an annular combustion chamber) within a combustor 70 (e.g., an annular combustor) of the combustor section 39. Fuel is injected into the combustion chamber 68 by one or more fuel injectors 72 and mixed with the compressed core air to provide a fuel-air mixture. This fuel-air mixture is ignited and combustion products thereof flow through and sequentially drive rotation of the HPT rotor 44 and the LPT rotor 46. The rotation of the HPT rotor 44 drives rotation of the compressor rotor 42 and, thus, the compression of the air received from the core inlet 64. The rotation of the LPT rotor 46 drives rotation of the fan rotor 32 - the driven rotor 30. The rotation of the fan rotor 32 propels some of the air flow thereacross (e.g., the air not entering the engine core 24) through the bypass flowpath 62 to provide engine thrust. Of course, where the driven rotor 30 is alternatively configured as the open propulsor rotor, the rotation of this open propulsor rotor may propel air outside of the aircraft powerplant 20 and its turbine engine 26. Where the driven rotor 30 is alternatively configured as the generator rotor, the rotation of this generator rotor may facilitate generation of electricity.

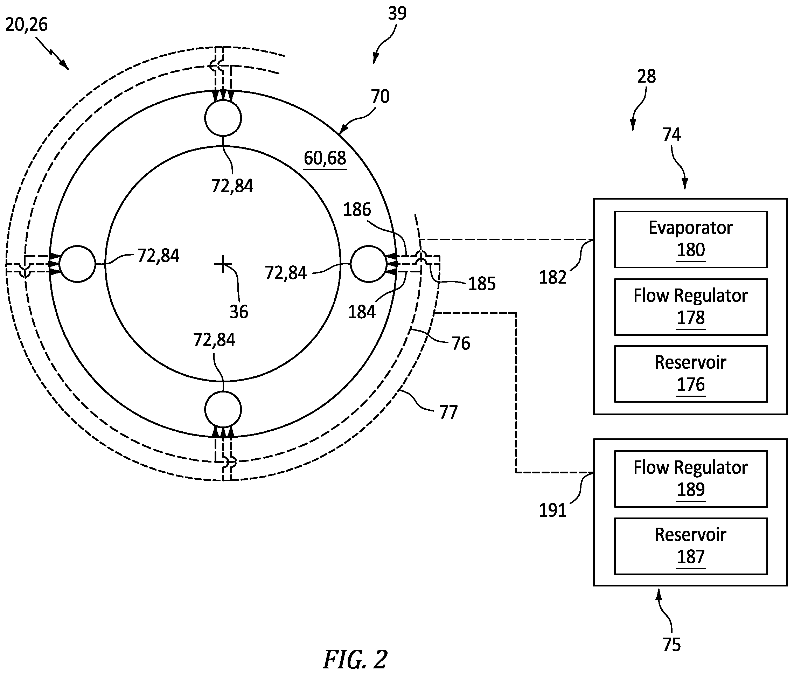

Referring to FIG. 2, the fuel delivery system 28 is configured to deliver the fuel to the combustor 70 for combustion as described above. Here, the fuel delivered by the fuel delivery system 28 is a gaseous fuel. The fuel delivery system 28 of FIG. 2, for example, includes the one or more fuel injectors 72, a gaseous fuel source 74, a liquid fuel source 75, a gaseous fuel manifold 76 and a liquid fuel manifold 77.

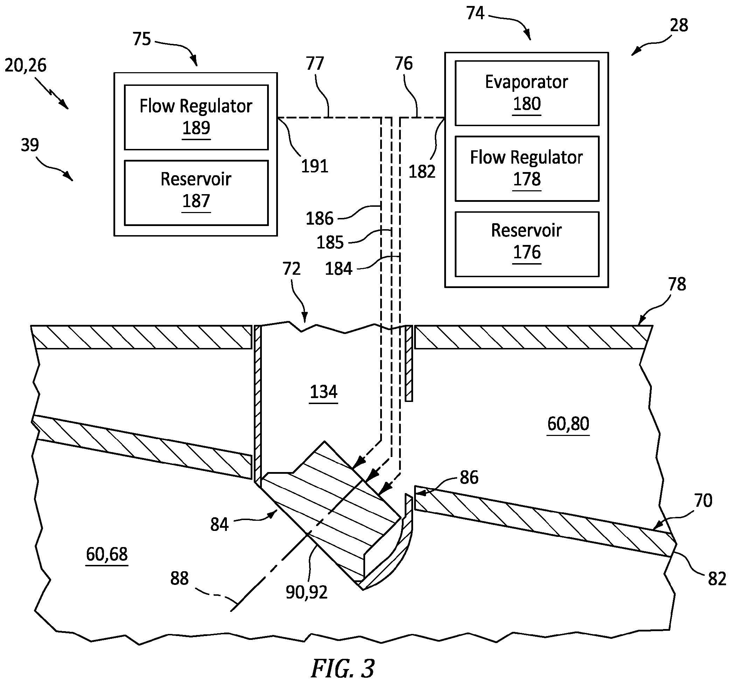

The fuel injectors 72 of FIG. 2 are arranged and may be equispaced circumferentially about the axis 36 in an annular array; e.g., a circular array. Referring to FIG. 3, each of the fuel injectors 72 may extend from an engine case 78, across a diffuser plenum 80 surrounding the combustor 70, to a wall 82 of the combustor 70. Briefly, the combustor wall 82 may be a sidewall of the combustor 70 or a bulkhead of the combustor 70 depending on the specific combustor configuration and/or fuel injector placement. Each of the fuel injectors 72 includes a fuel nozzle 84 mated with the combustor wall 82. The fuel nozzle 84 of FIG. 3, for example, projects through (or partially into) a port 86 in the combustor wall 82.

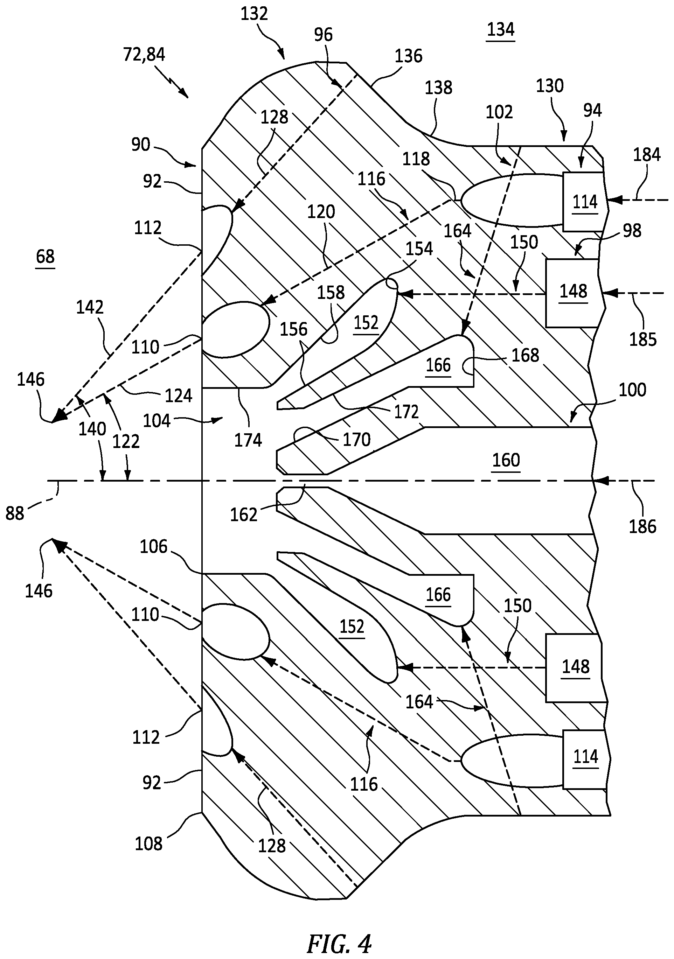

Referring to FIG. 4, the fuel nozzle 84 extends longitudinally along a longitudinal centerline 88 of the fuel nozzle 84 to a distal end 90 (e.g., a tip, a face) of the fuel nozzle 84. The fuel nozzle 84 of FIG. 4, for example, projects longitudinally along its nozzle centerline 88 through the respective combustor wall port 86 (see FIG. 3) to the nozzle distal end 90, and the nozzle distal end 90 is located within (or adjacent) the combustion chamber 68. The fuel nozzle 84 of FIG. 4 includes a nozzle face surface 92, an outer gaseous fuel circuit 94 and an outer air circuit 96. This fuel nozzle 84 may also include one or more additional fuel circuits 98 and/or 100, an inner air circuit 102 and/or a nozzle outlet 104. For ease of description, the fuel circuits 98 and 100 are described below as liquid fuel circuits. However, it is contemplated either one of these fuel circuits 98, 100 or both of these fuel circuits 98 and 100 may alternatively be configured as gaseous fuel circuits in other embodiments.

The nozzle face surface 92 is located at (e.g., on, adjacent or proximate) the nozzle distal end 90. The nozzle face surface 92 of FIG. 4, for example, completely (or partially) defines the nozzle distal end 90. The nozzle face surface 92 extends radially from an inner edge 106 of the nozzle face surface 92 to an outer edge 108 of the nozzle face surface 92. The nozzle face surface 92 extends circumferentially about (e.g., completely around) the nozzle centerline 88. The nozzle face surface 92 may thereby have a full-hoop (e.g., annular) geometry. The nozzle face surface 92 may be a planar surface. The nozzle face surface 92 of FIG. 4, for example, is a flat surface without convex, concave or other contours. Moreover, the nozzle face surface 92 may be radially and circumferentially uninterrupted besides one or more outer fuel passage outlets 110 from the outer gaseous fuel circuit 94 and one or more outer air passage outlets 112 from the outer air circuit 96. The nozzle face surface 92 is angularly offset from the nozzle centerline 88 by an offset angle. The nozzle face surface 92 of FIG. 4, for example, is perpendicular to the nozzle centerline 88; e.g., the face surface offset angle is a right angle (90°).

The outer gaseous fuel circuit 94 of FIG. 4 includes an outer gaseous fuel gallery 114 and one or more outer gaseous fuel passages 116. The outer gaseous fuel gallery 114 extends longitudinally within the fuel nozzle 84 between opposing longitudinally sides of the outer gaseous fuel gallery 114. The outer gaseous fuel gallery 114 extends radially within the fuel nozzle 84 between an inner side of the outer gaseous fuel gallery 114 and an outer side of the outer gaseous fuel gallery 114. The outer gaseous fuel gallery 114 extends circumferentially about (e.g., completely around, or substantially around) the nozzle centerline 88 within the fuel nozzle 84. The outer gaseous fuel gallery 114 may thereby have a full-hoop (e.g., annular) geometry, or a substantially full-hoop geometry.

The outer gaseous fuel passages 116 are arranged and may be equispaced circumferentially about the nozzle centerline 88 in an annular array; e.g., a circular array. Each of these outer gaseous fuel passages 116 extends from the outer gaseous fuel gallery 114 to its outer fuel passage outlets 110 in the nozzle face surface 92 at the nozzle distal end 90. Each of the outer gaseous fuel passages 116 thereby fluidly couples the outer gaseous fuel gallery 114 to the combustion chamber 68 adjacent the nozzle face surface 92. Each outer gaseous fuel passage 116 of FIG. 4 includes an upstream section 118 and a downstream section 120.

The outer gaseous fuel passage upstream section 118 extends longitudinally to the downstream side of the outer gaseous fuel gallery 114. Here, a centerline of the outer gaseous fuel passage upstream section 118 may be parallel with, or close to parallel with (e.g., within plus/minus five degrees (5°) of) the nozzle centerline 88, when viewed in a first reference plane parallel with (e.g., including) the nozzle centerline 88.

The outer gaseous fuel passage downstream section 120 extends diagonally inward to the nozzle distal end 90 / the nozzle face surface 92. More particularly, the outer gaseous fuel passage downstream section 120 of FIG. 4 extends longitudinally (in a first longitudinal direction towards the nozzle distal end 90) and radially (in a radial inward direction towards the nozzle centerline 88) to its respective outer fuel passage outlet 110. Here, the outer fuel passage centerline is angularly offset from the nozzle centerline 88 by a non-zero offset angle 122 when viewed in the first reference plane. This downstream section offset angle 122 may be an acute angle equal to or greater than fifteen degrees (15°), up to seventy-five degrees (75°) for example. The downstream section offset angle 122, for example, may be between fifteen degrees (15°) and thirty degrees (30°), between thirty degrees (30°) and sixty degrees (60°), or between sixty degrees (60°) and seventy-five degrees (75°).

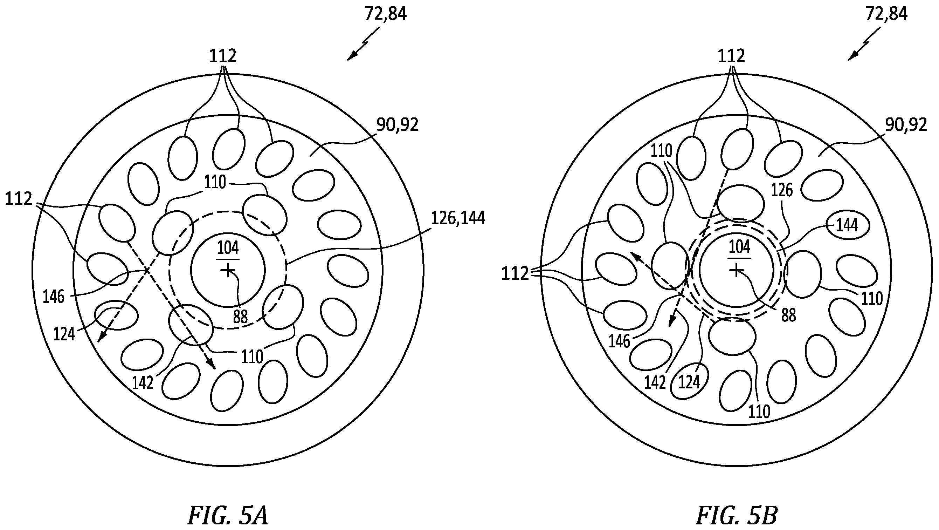

A trajectory 124 of the outer fuel passage centerline at the respective outer fuel passage outlet 110 projects along a reference line (e.g., a straight line extension of the outer fuel passage centerline) out from the nozzle distal end 90 / the nozzle face surface 92 longitudinally in the first longitudinal direction and radially in the radial inward direction. This outer fuel passage trajectory 124 may thereby also be angularly offset from the nozzle centerline 88 by the downstream section offset angle 122. However, while the outer fuel passage trajectory 124 projects radially inward towards the nozzle centerline 88, the outer fuel passage trajectory 124 may be non-coincident with the nozzle centerline 88. For example, referring to FIGS. 5A and 5B, the outer fuel passage trajectory 124 may also project out from the nozzle distal end 90 / the nozzle face surface 92 in a direction tangent (or close to tangent) to a reference circle 126 coaxial with the nozzle centerline 88. Referring to FIG. 5A, the tangent direction may generally be in a first circumferential direction (e.g., a counterclockwise direction) about the nozzle centerline 88. The outer gaseous fuel circuit 94 and its outer gaseous fuel passages 116 may thereby swirl the gaseous fuel injected into the combustion chamber 68 in the first circumferential direction about the nozzle centerline 88. Alternatively, referring to FIG. 5B, the tangent direction may generally be in a second circumferential direction (e.g., a clockwise direction) about the nozzle centerline 88. The outer gaseous fuel circuit 94 and its outer gaseous fuel passages 116 may thereby swirl the gaseous fuel injected into the combustion chamber 68 in the second circumferential direction about the nozzle centerline 88. The outer fuel passage trajectory 124 of FIGS. 5A and 5B may have a tangential angle with respect to the radial direction out from the nozzle centerline 88 towards an outside of the fuel nozzle 84 in a range of up to plus/minus sixty degrees (+/- 60°).

The outer air circuit 96 of FIG. 4 is disposed radially outboard of and longitudinally overlaps the outer gaseous fuel circuit 94. For example, the outer gaseous fuel circuit 94 of FIG. 4 as well as the mid liquid fuel circuit 98, the inner liquid fuel circuit 100, the inner air circuit 102 and the nozzle outlet 104 are configured with a base 130 of the fuel nozzle 84. The outer air circuit 96 of FIG. 4, by contrast, is configured with the nozzle base 130 and an outer peripheral wall 132 (e.g., a flange) of the fuel nozzle 84. This nozzle wall 132 is disposed at the nozzle distal end 90 and may (or may not) partially form the nozzle face surface 92. The nozzle wall 132 is connected to (e.g., formed integral with or otherwise attached to) the nozzle base 130. The nozzle wall 132 of FIG. 4 projects radially (in a radial outward direction away from the nozzle centerline 88) out from the nozzle base 130 to an outer distal end of the nozzle wall 132.

The outer air circuit 96 includes one or more outer air passages 128. These outer air passages 128 are arranged and may be equispaced circumferentially about the nozzle centerline 88 in an annular array; e.g., a circular array. Each of these outer air passages 128 extends diagonally inward through the nozzle wall 132 from an internal volume 134 adjacent a backside 136 of the nozzle wall 132 / an outer side 138 of the nozzle base 130 to the nozzle distal end 90 / the nozzle face surface 92. More particularly, each outer air passage 128 of FIG. 4 extends longitudinally in the first longitudinal direction and radially in the radial inward direction to its respective outer air passage outlet 112. The outer air circuit 96 and its outer air passages 128 thereby fluidly couple the internal volume 134 to the combustion chamber 68. Referring to FIG. 3, the internal volume 134 may be a cavity within the respective fuel injector 72 which fluidly couples the diffuser plenum 80 to the outer air circuit 96 and the inner air circuit 102. Alternatively, the internal volume 134 may be the diffuser plenum 80 itself or another air source within the turbine engine 26 and outside of the combustor 70.

Referring to FIG. 4, a centerline of each outer air passage 128 is angularly offset from the nozzle centerline 88 by a non-zero offset angle 140 when viewed in the first reference plane. This outer air passage offset angle 140 may be an acute angle equal to or greater than fifteen degrees (15°), up to seventy-five degrees (75°) for example. The outer air passage offset angle 140, for example, may be between fifteen degrees (15°) and thirty degrees (30°), between thirty degrees (30°) and sixty degrees (60°), or between sixty degrees (60°) and seventy-five degrees (75°). This outer air passage offset angle 140 of FIG. 4, however, is greater than the downstream section offset angle 122.

A trajectory 142 of the outer air passage centerline at the respective outer air passage outlet 112 projects along a reference line (e.g., a straight line extension of the outer air passage centerline) out from the nozzle distal end 90 / the nozzle face surface 92 longitudinally in the first longitudinal direction and radially in the radial inward direction. This outer air passage trajectory 142 may thereby also be angularly offset from the nozzle centerline 88 by the outer air passage offset angle 140. However, while the outer air passage trajectory 142 projects radially inward towards the nozzle centerline 88, the outer air passage trajectory 142 may be non-coincident with the nozzle centerline 88. For example, referring to FIGS. 5A and 5B, the outer air passage trajectory 142 may also project out from the nozzle distal end 90 / the nozzle face surface 92 in a direction tangent (or close to tangent) to a reference circle 144 coaxial with the nozzle centerline 88. This tangent direction may generally be in the first circumferential direction (e.g., the counterclockwise direction) about the nozzle centerline 88. The outer air circuit 96 and its outer air passages 128 may thereby swirl the compressed core air injected into the combustion chamber 68 in the first circumferential direction about the nozzle centerline 88. In some embodiments, referring to FIG. 5A, the outer air circuit 96 and the outer gaseous fuel circuit 94 are configured to swirl their injected fluids in a common direction; e.g., the first circumferential direction, or alternatively the second circumferential direction. In other embodiments, referring to FIG. 5B, the outer air circuit 96 and the outer gaseous fuel circuit 94 are configured to swirl their injected fluids in opposite directions. The outer air passage trajectory 142 of FIGS. 5A and 5B may have a tangential angle with respect to the radial direction out from the nozzle centerline 88 towards the outside of the fuel nozzle 84 in a range of up to plus/minus sixty degrees (+/- 60°).

Referring to FIG. 4, the outer air passage trajectory 142 associated with one or more of the outer air passages 128 may be coincident with the outer fuel passage trajectory 124 associated with one or more of the outer gaseous fuel passages 116 at a respective target location 146; see also FIGS. 5A and 5B. Each target location 146 is spaced a non-zero longitudinal distance from the nozzle distal end 90 / the nozzle face surface 92 along the nozzle centerline 88. Each target location 146 is spaced radially outward a non-zero radial distance from the nozzle centerline 88. The longitudinal distance and/or the radial distance may be sized to tune combustion dynamics within the combustion chamber 68. For example, the longitudinal distance and/or the radial distance may be sized to influence flame size, flame shape and/or flame distance from the fuel nozzle 84 and its nozzle face surface 92. For example, in some embodiments, the longitudinal distance may be between one-half of an inch (0.5 inches) and three and one-half inches (3.5 inches).

Referring to FIGS. 5A and 5B, the outer air passage outlets 112 are disposed radially outboard of the outer fuel passage outlets 110. The outer air passage outlets 112 of FIGS. 5A and 5B, for example, are arranged and may be equispaced circumferentially about the nozzle centerline 88 in an annular array; e.g., a circular array. Similarly, the outer fuel passage outlets 110 are arranged and may be equispaced circumferentially about the nozzle centerline 88 in an annular array; e.g., a circular array. Here, the array of the outer air passage outlets 112 is spaced radially outboard from the array of the outer fuel passage outlets 110 along the nozzle distal end 90 / the nozzle face surface 92. The array of the outer air passage outlets 112 also circumscribes the array of the outer fuel passage outlets 110. The compressed air injected into the combustion chamber 68 by the outer air circuit 96 may thereby shroud the gaseous fuel injected into the combustion chamber 68 by the outer gaseous fuel circuit 94 until or about the target location 146. This may facilitate deeper penetration of the gaseous fuel into the combustion chamber 68 prior to mixing with the compressed core air and igniting.

Referring to FIG. 4, the mid liquid fuel circuit 98 includes a mid liquid fuel gallery 148, one or more mid liquid fuel passages 150 and a liquid fuel annulus 152. The mid liquid fuel gallery 148 extends longitudinally within the fuel nozzle 84 between opposing longitudinally sides of the mid liquid fuel gallery 148. The mid liquid fuel gallery 148 extends radially within the fuel nozzle 84 between an inner side of the mid liquid fuel gallery 148 and an outer side of the mid liquid fuel gallery 148. The mid liquid fuel gallery 148 extends circumferentially about (e.g., completely around, or substantially around) the nozzle centerline 88 within the fuel nozzle 84. The mid liquid fuel gallery 148 may thereby have a full-hoop (e.g., annular) geometry, or a substantially full-hoop geometry.

The mid liquid fuel passages 150 are arranged and may be equispaced circumferentially about the nozzle centerline 88 in an annular array; e.g., a circular array. Each of these mid liquid fuel passages 150 extends from the mid liquid fuel gallery 148 to the liquid fuel annulus 152. Each of the mid liquid fuel passages 150 thereby fluidly couples the mid liquid fuel gallery 148 to the liquid fuel annulus 152, for example at an upstream end 154 of the liquid fuel annulus 152.

The liquid fuel annulus 152 extends longitudinally within the fuel nozzle 84 from its upstream end 154 to the nozzle outlet 104. The liquid fuel annulus 152 of FIG. 4, for example, projects diagonally inward from its upstream end 154 to the nozzle outlet 104. The liquid fuel annulus 152 thereby fluidly couples each of the mid liquid fuel passages 150 to the nozzle outlet 104. The liquid fuel annulus 152 extends radially from a radially tapered inner side 156 of the liquid fuel annulus 152 to a radially tapered outer side 158 of the liquid fuel annulus 152. The liquid fuel annulus 152 extends circumferentially about (e.g., completely around) the nozzle centerline 88 within the fuel nozzle 84. The liquid fuel annulus 152 may thereby have a full-hoop (e.g., annular) geometry. The liquid fuel annulus 152 of FIG. 4 is configured as a radially tapering and convergent annulus.

The inner liquid fuel circuit 100 includes an inner liquid fuel passage 160 and an inner fuel passage outlet 162. The inner liquid fuel passage 160 may be configured as a central bore in the fuel nozzle 84. The inner fuel passage outlet 162 may be coaxial with the inner liquid fuel passage 160 and the nozzle centerline 88. This inner fuel passage outlet 162 projects through an endwall of the nozzle base 130 at a downstream end of the inner liquid fuel passage 160. The inner fuel passage outlet 162 thereby fluidly couples the inner fuel passage outlet 162 to the nozzle outlet 104.

The inner air circuit 102 of FIG. 4 includes one or more inner air passages 164 and an annular inner nozzle passage 166. The inner air passages 164 are arranged and may be equispaced circumferentially about the nozzle centerline 88 in an annular array; e.g., a circular array. Each of these inner air passages 164 extends from the internal volume 134 to the inner nozzle passage 166. More particularly, each inner air passage 164 of FIG. 4 projects diagonally inward into the nozzle base 130 from the nozzle base outer side 138 to the inner nozzle passage 166, for example adjacent an upstream end 168 of the inner nozzle passage 166. Each inner air passage 164 may thereby be fluidly coupled to the inner nozzle passage 166 at the inner nozzle passage upstream end 168.

The inner nozzle passage 166 extends longitudinally within the fuel nozzle 84 from its upstream end 168 to the nozzle outlet 104. The inner nozzle passage 166 of FIG. 4, for example, projects diagonally inward from its upstream end 168 to the nozzle outlet 104. The inner nozzle passage 166 thereby fluidly couples each of the inner air passages 164 to the nozzle outlet 104. The inner nozzle passage 166 extends radially from a radially tapered inner side 170 of the inner nozzle passage 166 to a radially tapered outer side 172 of the inner nozzle passage 166. The liquid fuel annulus 152 extends circumferentially about (e.g., completely around) the nozzle centerline 88 within the fuel nozzle 84. The inner nozzle passage 166 may thereby have a full-hoop (e.g., annular) geometry. The inner nozzle passage 166 of FIG. 4 is configured as a radially tapering annulus. Here, the inner nozzle passage 166 is disposed radially between the liquid fuel annulus 152 and the inner liquid fuel circuit 100. More particularly, the inner nozzle passage 166 of FIG. 4 longitudinally overlaps and circumscribes the inner nozzle passage 166. The liquid fuel annulus 152 longitudinally overlaps and circumscribes the inner nozzle passage 166.

The nozzle outlet 104 is disposed at the nozzle distal end 90. The nozzle outlet 104 of FIG. 4, for example, extends longitudinally along the nozzle centerline 88 within the fuel nozzle 84 from (a) the liquid fuel annulus 152, the inner fuel passage outlet 162 and the inner nozzle passage 166 to (b) an outlet orifice in the nozzle distal end 90 at the inner edge 106 of the nozzle face surface 92. The nozzle outlet 104 of FIG. 4 thereby fluidly couples each of the nozzle members 152, 162, 166 to the combustion chamber 68. The nozzle outlet 104 of FIG. 4 projects radially outward within the fuel nozzle 84 from the nozzle centerline 88 to an outer side 174 of the nozzle outlet 104. This nozzle outlet outer side 174 may be parallel with, or close to parallel with (e.g., within plus/minus five degrees (5°) of) the nozzle centerline 88 when viewed in the first reference plane. The nozzle outlet 104 extends circumferentially about (e.g., completely around) the nozzle centerline 88 within the fuel nozzle 84. The nozzle outlet 104 may thereby have a solid (e.g., non-annular) geometry; e.g., a solid circular geometry.

Referring to FIG. 2, the gaseous fuel source 74 includes a fuel reservoir 176, a fuel flow regulator 178 and a fuel evaporator 180. The fuel reservoir 176 is configured to store a quantity of fuel (e.g., in its liquid phase) before, during and/or after aircraft powerplant operation. The fuel reservoir 176, for example, may be configured as or otherwise include a tank, a cylinder, a pressure vessel, a bladder or any other type of (e.g., insulated) fuel storage container. The fuel flow regulator 178 is configured to direct a flow of the fuel (e.g., in its liquid phase) from the fuel reservoir 176 to the fuel evaporator 180. The fuel flow regulator 178, for example, may be configured as or otherwise include a fuel compressor, a fuel pump and/or a fuel valve (or valve system). The fuel evaporator 180 is configured to facilitate evaporation of the fuel from its liquid phase to a gaseous phase so as to output the gaseous fuel from an outlet 182 of the gaseous fuel source 74. This gaseous fuel source outlet 182 may be fluidly coupled to each of the gaseous fuel circuits 94 (see FIG. 4) sequentially through the gaseous fuel manifold 76 and a respective gaseous fuel feed passage 184, which gaseous fuel feed passage 184 fluidly couples the gaseous fuel manifold 76 to the respective fuel nozzle member 114 (see FIG. 4) for example.

The gaseous fuel may be a non-hydrocarbon gas. The gaseous fuel, for example, may be or otherwise include hydrogen gas (H₂ gas), and the fuel stored within the fuel reservoir 176 may be liquid hydrogen (liquid H₂). The gaseous fuel, however, is not limited to non-hydrocarbon gases. The gaseous fuel, for example, may alternatively by or otherwise include gaseous methane (e.g., natural gas) or propane. However, use of the non-hydrocarbon gas such as the hydrogen gas may be particularly beneficial for reduction in emissions from the turbine engine 26 (see FIG. 1). The gaseous fuel may therefore be generally described below as the hydrogen gas for ease of description.

The liquid fuel source 75 of FIG. 2 includes a fuel reservoir 187 and a fuel flow regulator 189. The fuel reservoir 187 is configured to store a quantity of fuel (e.g., in its liquid phase) before, during and/or after aircraft powerplant operation. The fuel reservoir 187, for example, may be configured as or otherwise include a tank, a cylinder, a pressure vessel, a bladder or any other type of fuel storage container. The fuel flow regulator 189 is configured to direct a flow of the fuel (e.g., in its liquid phase) from the fuel reservoir 187 to an outlet 191 of the liquid fuel source 75. The fuel flow regulator 189, for example, may be configured as or otherwise include a fuel pump and/or a fuel valve (or valve system). This liquid fuel source outlet 191 may be fluidly coupled to each fuel circuit 98, 100 (see FIG. 4) sequentially through the liquid fuel manifold 77 and a respective liquid fuel feed passage 185, 186, which liquid fuel feed passage 185, 186 fluidly couples the liquid fuel manifold 77 to the respective fuel nozzle member 148, 160 (see FIG. 4) for example.

The liquid fuel may be a hydrocarbon liquid. The liquid fuel, for example, may be or otherwise include kerosene, jet fuel (e.g., Jet A fuel), sustainable aviation fuel (SAF) or any other power-to-liquid (PTL) fuel, or the like. The present invention, however, is not limited to the foregoing exemplary liquid fuels, nor to hydrocarbon liquids.

During fuel delivery system operation, each fuel nozzle 84 receives the gaseous fuel from the gaseous fuel source 74 and/or the liquid fuel from the liquid fuel source 75. During one or more multi-fuel modes of engine operation, referring to FIG. 4, the fuel circuit 94 and one or more of the fuel circuits 98 and/or 100 may receive its respective fuel simultaneously. During one or more gaseous modes of operation, (e.g., only) the fuel circuit 94 may receive its gaseous fuel. During one or more liquid modes of operation, (e.g., only) one or both of the fuel circuits 98 and 100 may receive its liquid fuel. However, for ease of description, operation is described during one of the multi-fuel modes of engine operation where the fuel circuit 94 receives its gaseous fuel and each of the fuel circuits 98, 100 receives its liquid fuel.

The gaseous fuel is directed through the gaseous fuel circuit 94 for injection into the combustion chamber 68. The liquid fuel is directed through each of the fuel circuits 98, 100 for injection into the combustion chamber 68. Simultaneously, each of the air circuits 96, 102 directs a portion of the compressed core air received from the internal volume 134 into the combustion chamber 68. This compressed core air may mix with the flows of the fuel (e.g., within the combustion chamber 68) to provide the fuel-air mixture for combustion. Notably, by injecting the gaseous fuel and the compressed core air respectively out of the outer gaseous fuel circuit 94 and the outer air circuit 96 along the trajectories 124 and 142 described above, the gaseous fuel and the compressed core air may mix downstream of the respective fuel nozzle 84 within the combustion chamber 68. This may reduce or prevent the flame from attaching to the nozzle face surface 92 as well as facilitate tailoring flame size, flame shape, etc. Here, a focal point for the trajectories 124 and 142 (see the respective target locations 146) may be selected as a function of nozzle ACd (effective flow area), fuel ACd (effective flow area), and swirl orientation to provide a select flame location, flame size and flame shape.

For ease of description, the gaseous fuel circuits 94, 98 and 100 are described above as receiving the gaseous fuel simultaneously during operation. However, it is contemplated that the gaseous fuel may also or alternatively just be provided to any single one of the gaseous fuel circuits 94, 98, 100 or any two of the gaseous fuel circuits 94, 98, 100. Moreover, while the mid fuel circuit 98 and the inner fuel circuit 100 are each described as receiving the gaseous fuel, it is contemplated one or both of these fuel circuits 98 and/or 100 may alternatively receive a liquid fuel. The liquid fuel may be a hydrocarbon liquid. The liquid fuel, for example, may be or otherwise include kerosene, jet fuel (e.g., jet A fuel), sustainable aviation fuel (SAF) or any other power-to-liquid (PTL) fuel, or the like. The present invention, however, is not limited to the foregoing exemplary liquid fuels, nor to hydrocarbon liquids.

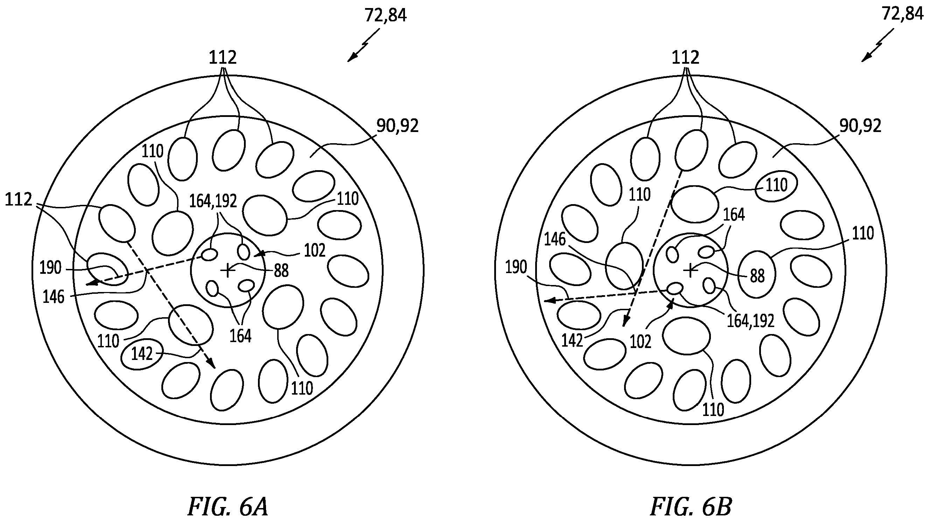

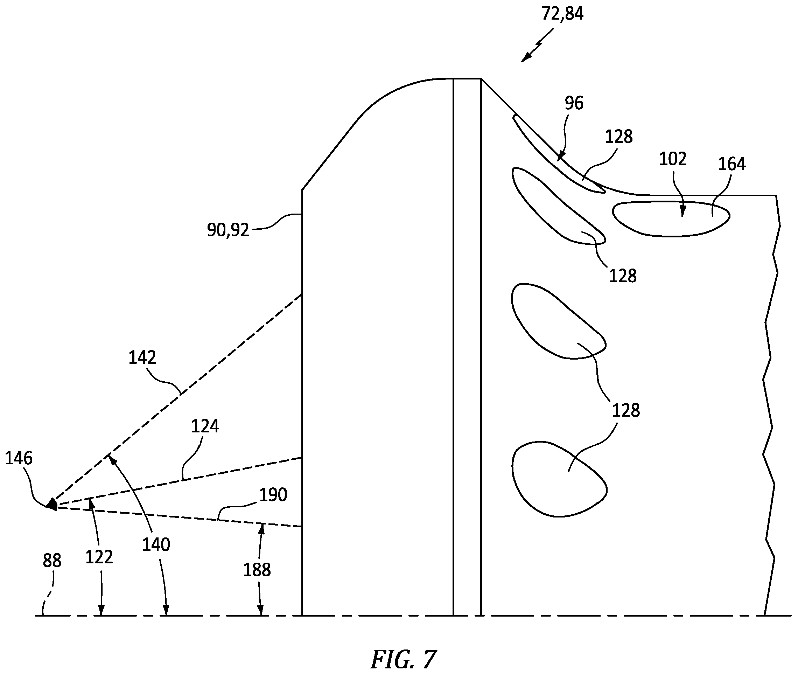

In some embodiments, referring to FIGS. 6A and 6B, the inner air circuit 102 may omit the inner nozzle passage 166. Each of the inner air passages 164 may alternatively extend within the fuel nozzle 84 to the nozzle outlet 104, or still alternatively to the nozzle distal end 90 / the nozzle face surface 92. Referring to FIG. 7, a centerline of each inner air passage 164 may be angularly offset from the nozzle centerline 88 by a non-zero offset angle 188 when viewed in the first reference plane. This inner air passage offset angle 188 may be an acute angle equal to or less than thirty degrees (30°) or fifteen degrees (15°).

A trajectory 190 of the inner air passage centerline at an outlet 192 (see FIG. 6A, 6B) of the respective inner air passage 164 projects along a reference line (e.g., a straight line extension of the inner air passage centerline) out from the nozzle distal end 90 longitudinally in the first longitudinal direction and radially in the radial outward direction away from the nozzle centerline 88. This inner air passage trajectory 190 may thereby also be angularly offset from the nozzle centerline 88 by the inner air passage offset angle 188. The inner air passage trajectory 190 associated with one or more of the inner air passages 164 may be coincident with the outer air passage trajectory 142 associated with one or more of the outer air passages 128 at the respective target location 146; see also FIGS. 6A and 6B.

Referring to FIGS. 6A and 6B, the inner air passage trajectory 190 may also project out from the nozzle distal end 90 in a direction tangent (or close to tangent) to a reference circle coaxial with the nozzle centerline 88. Referring to FIG. 6A, the tangent direction may generally be in the first circumferential direction (e.g., the counterclockwise direction) about the nozzle centerline 88. The inner air circuit 102 and its inner air passages 164 may thereby swirl the compressed core air injected into the combustion chamber 68 in the first circumferential direction about the nozzle centerline 88. Alternatively, referring to FIG. 6B, the tangent direction may generally be in the second circumferential direction (e.g., the clockwise direction) about the nozzle centerline 88. The inner air circuit 102 and its inner air passages 164 may thereby swirl the compressed core air injected into the combustion chamber 68 in the second circumferential direction about the nozzle centerline 88. In some embodiments, referring to FIG. 6A, the inner air circuit 102 and the outer air circuit 96 are configured to swirl their injected fluids in a common direction; e.g., the first circumferential direction, or alternatively the second circumferential direction. In other embodiments, referring to FIG. 6B, the inner air circuit 102 and the outer air circuit 96 are configured to swirl their injected fluids in opposite directions.

In some embodiments, each outer fuel passage outlet 110 may be sized greater than a hydraulic diameter of 0.02 inches. This may facilitate improved gaseous fuel jet penetration into the combustion chamber 68 and away from the nozzle face surface 92.

In some embodiments, a number of the outer gaseous fuel passages 116 to a number of the outer air passages 128 can range from a ratio of 0.25:1 to a ratio of 4:1.

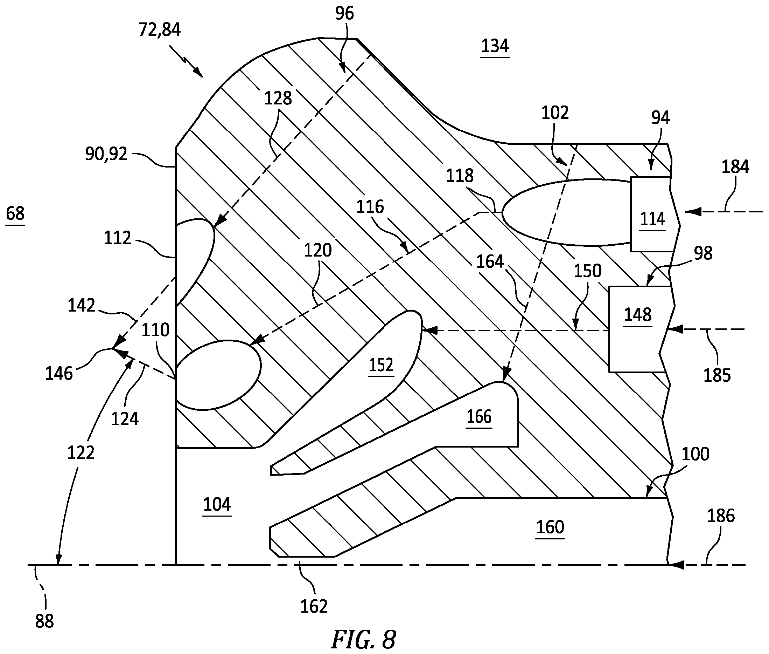

In some embodiments, referring to FIG. 4, each of the outer gaseous fuel passage 116 is configured to direct a jet of the gaseous fuel into the combustion chamber 68 in the diagonal inward direction towards the nozzle centerline 88. In other embodiments, referring to FIG. 8, each of the outer gaseous fuel passage 116 may alternatively be configured to direct its jet of the gaseous fuel into the combustion chamber 68 in the diagonal outward direction away from the nozzle centerline 88. Here, the downstream section offset angle 122 may be a non-zero acute angle less than or equal to forty-five degrees (45°), thirty degrees (30°), or fifteen degrees (15°). However, it is contemplated the outer fuel passage trajectory 124 may still alternatively be parallel with the nozzle centerline 88.

In some embodiments, each fuel nozzle 84 may be formed as a monolithic body. Each fuel nozzle 84, for example, may be cast, machined, additively manufactured and/or otherwise formed as a single unitary body. In other embodiments, however, each fuel nozzle 84 may alternatively be formed from a plurality of discretely formed members which are subsequently bonded, mechanically fastened and/or otherwise attached together to form the respective fuel nozzle 84.

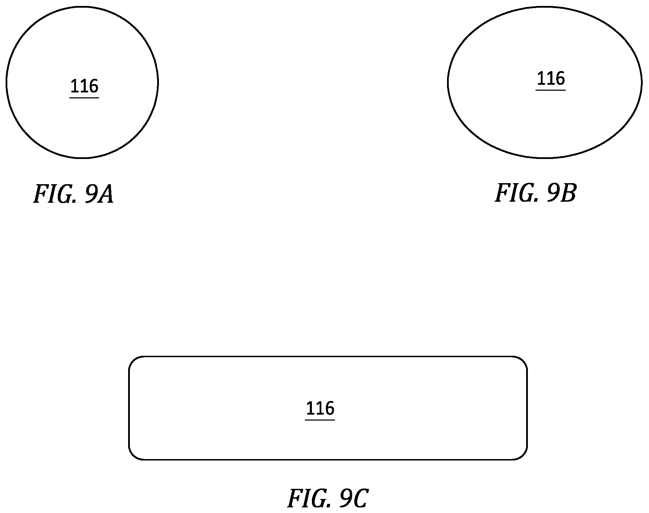

In some embodiments, referring to FIG. 9A, any one or more or all of the outer gaseous fuel passages 116 may each have a circular cross-sectional geometry when viewed, for example, in a second reference plane perpendicular to a centerline of the respective gaseous fuel passage 116. In other embodiments, referring to FIG. 9B, any one or more or all of the outer gaseous fuel passages 116 may each have an elliptical cross-sectional geometry when viewed, for example, in the second reference plane. In still other embodiments, referring to FIG. 9C, any one or more or all of the outer gaseous fuel passages 116 may each have an elongated (e.g., slot-like) cross-sectional geometry when viewed, for example, in the second reference plane.

In some embodiments, each of the outer air passages 128 may be formed as a discrete hole. In other embodiments, each of the outer air passages 128 may be formed between a respective adjacent pair of vanes.

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An apparatus for a powerplant (20), the apparatus scomprising:
a fuel nozzle (84) extending longitudinally along a nozzle centerline (88) to a distal end (90), the fuel nozzle (84) including a plurality of gaseous fuel passages (116) and a plurality of air passages (128);
the plurality of gaseous fuel passages (116) arranged circumferentially about the nozzle centerline (88), the plurality of gaseous fuel passages (116) respectively extending within the fuel nozzle (84) to a plurality of fuel passage outlets (110) disposed at the distal end (90) of the fuel nozzle (84);
the plurality of air passages (128) arranged circumferentially about the nozzle centerline (88), the plurality of air passages (128) respectively extending within the fuel nozzle (84) to a plurality of air passage outlets (112) disposed at the distal end (90) of the fuel nozzle (84); and
the plurality of fuel passage outlets (110) and the plurality of air passage outlets (112) disposed in a common plane.

2. The apparatus of claim 1, wherein the common plane is perpendicular to the nozzle centerline (88).

3. The apparatus of claim 1 or 2, further comprising:
a fuel delivery system (28) comprising a gaseous fuel source (74);
the fuel delivery system (28) configured to deliver gaseous fuel to the fuel nozzle (84) for directing through the plurality of gaseous fuel passages (116).

4. The apparatus of any preceding claim, wherein:
the plurality of fuel passage outlets (110) are arranged circumferentially about the nozzle centerline (88) in an annular fuel passage outlet array; and
the plurality of air passage outlets (112) are arranged circumferentially about the nozzle centerline (88) in an annular air passage outlet array which is radially outboard of and circumscribes the annular fuel passage outlet array.

5. The apparatus of any preceding claim, wherein:
the plurality of gaseous fuel passages (116) comprise a first gaseous fuel passage (116), and the plurality of fuel passage outlets (110) comprise a first fuel passage outlet (110);
the first gaseous fuel passage (116) extends along a fuel passage centerline to the first fuel passage outlet (110); and
a trajectory (124) of the fuel passage centerline at the first fuel passage outlet (110) projects out from the distal end (90) of the fuel nozzle (84) in a radially inward direction towards the nozzle centerline (88).

6. The apparatus of claim 5, wherein:
the trajectory (124) of the fuel passage centerline at the first fuel passage outlet (110) is non-coincident with the nozzle centerline (88); and/or
the trajectory (124) of the fuel passage centerline at the first fuel passage outlet (110) further projects out from the distal end (90) of the fuel nozzle (84) in a direction tangent to a reference circle (126) coaxial with the nozzle centerline (88).

7. The apparatus of claim 5 or 6, wherein:
the plurality of air passages (128) comprise a first air passage (128), and the plurality of air passage outlets (112) comprise a first air passage outlet (112);
the first air passage (128) extends along an air passage centerline to the first air passage outlet (112); and
a trajectory (142) of the air passage centerline at the first air passage outlet (112) projects out from the distal end (90) of the fuel nozzle (84) in a radially inward direction towards the nozzle centerline (88).

8. The apparatus of claim 7, wherein the trajectory (142) of the air passage centerline projecting out the first air passage outlet (112) is coincident with the trajectory (124) of the fuel passage centerline projecting out from the first fuel passage outlet (110) at a target location (146), wherein, optionally, the target location (146) is spaced radially out from the nozzle centerline (88).

9. The apparatus of claim 7 or 8, wherein
the plurality of air passages (128) are first air passages (128), and the fuel nozzle (84) further includes a plurality of second air passages (164);
the plurality of second air passages (164) are arranged circumferentially about the nozzle centerline (88), the plurality of second air passages (164) respectively extend within the fuel nozzle (84) to a plurality of second air passage outlets (192);
one of the plurality of second air passages (164) extends along a second air passage centerline to a respective one of the plurality of second air passage outlets (192); and
a trajectory (190) of the second air passage centerline at the respective one of the plurality of second air passage outlets (192) projects out from the fuel nozzle (84) in a radially outward direction away from the nozzle centerline (88).

10. The apparatus of any of claims 1 to 4, wherein
the plurality of air passages (128) comprise a first air passage (128), and the plurality of air passage outlets (112) comprise a first air passage outlet (112);
the first air passage (128) extends along an air passage centerline to the first air passage outlet (112); and
a trajectory (142) of the air passage centerline at the first air passage outlet (112) projects out from the distal end (90) of the fuel nozzle (84) in a radially inward direction towards the nozzle centerline (88).

11. The apparatus of any of claims 7 to 10, wherein:
the trajectory (142) of the air passage centerline at the first air passage outlet (112) is non-coincident with the nozzle centerline (88); and/or
the trajectory (142) of the air passage centerline at the first air passage outlet (112) further projects out from the distal end (90) of the fuel nozzle (84) in a direction tangent to a reference circle (144) coaxial with the nozzle centerline (88).

12. The apparatus of any preceding claim, wherein
the fuel nozzle (84) is configured to direct gaseous fuel out of the plurality of fuel passage outlets (110) to swirl in a first direction about the nozzle centerline (88); and
the fuel nozzle (84) is configured to direct compressed air out of the plurality of air passage outlets (112) to swirl either:
in a second direction about the nozzle centerline (88) opposite the first direction; or
in the first direction about the nozzle centerline (88).

13. An apparatus for a powerplant (20), the apparatus comprising:
a fuel nozzle (84) extending longitudinally along a nozzle centerline (88) to a distal end (90), the fuel nozzle (84) including a plurality of fuel passages (116) and a plurality of air passages (128);
the plurality of fuel passages (116) arranged circumferentially about the nozzle centerline (88), the plurality of fuel passages (116) respectively extending within the fuel nozzle (84) to a plurality of fuel passage outlets (110) disposed at the distal end (90) of the fuel nozzle (84), and the fuel nozzle (84) configured to direct fuel out of the fuel nozzle (84) from each of the plurality of fuel passage outlets (110) along a respective fuel flow trajectory (124) projecting radially inwards towards the nozzle centerline (88) away from the distal end (90) of the fuel nozzle (84); and
the plurality of air passages (128) arranged circumferentially about the nozzle centerline (88), the plurality of air passages (128) respectively extending within the fuel nozzle (84) to a plurality of air passage outlets (112) disposed at the distal end (90) of the fuel nozzle (84), and the fuel nozzle (84) configured to direct compressed air out of the fuel nozzle (84) from each of the plurality of air passage outlets (112) along a respective air flow trajectory (142) projecting radially inwards towards the nozzle centerline (88) away from the distal end (90) of the fuel nozzle (84).

14. The apparatus of claim 13, wherein:
the plurality of fuel passage outlets (110) and the plurality of air passage outlets (112) are disposed in a common plane perpendicular to the nozzle centerline (88); and/or
the apparatus further comprises a fuel delivery system (28) comprising a gaseous fuel source (74), wherein the fuel directed out of the fuel nozzle (84) is gaseous fuel which is received by the fuel nozzle (84) from the gaseous fuel source (74).

15. An apparatus for a powerplant (20), the apparatus comprising:
a fuel nozzle (84) extending longitudinally along a nozzle centerline (88) to a distal end (90), the fuel nozzle (84) including a plurality of fuel passages (116) and a plurality of air passages (128);
the plurality of fuel passages (116) arranged circumferentially about the nozzle centerline (88) in an annular array, the plurality of fuel passages (116) respectively extending within the fuel nozzle (84) to a plurality of fuel passage outlets (110) disposed at the distal end (90) of the fuel nozzle (84);
the plurality of air passages (128) arranged circumferentially about the nozzle centerline (88) in an annular array, the plurality of air passages (128) respectively extending within the fuel nozzle (84) to a plurality of air passage outlets (112) disposed at the distal end (90) of the fuel nozzle (84); and
the plurality of fuel passage outlets (110) arranged radially inboard of the plurality of air passage outlets (112).
